# EUROPEAN PATENT APPLICATION

(11) **EP 4 650 131 A1**
(43) Date of publication of application: **19.11.2025**
(21) Application number: 23916299.3
(22) Date of filing: 27.12.2023
(51) Int. Cl.: B29B 11/16, B29B 15/08, D01G 1/04, D01G 25/00, D06H 7/02, B29K 101/10

(54) **METHOD AND DEVICE FOR PRODUCING CARBON FIBER SHEET MOLDING COMPOUND**

(30) Priority: 12.01.2023 JP 2023002937
(71) Applicant: Mitsubishi Chemical Corporation, Tokyo 100-8251 (JP)
(72) Inventor: ITOKAWA, Aya, Tokyo 100-8251 (JP); MIZUTORI, Yukihiro, Tokyo 100-8251 (JP); ODA, Kentaro, Tokyo 100-8251 (JP); WATANABE, Yasushi, Tokyo 100-8251 (JP); SAMEJIMA, Tadao, Tokyo 100-8251 (JP)
(74) Representative: Hoffmann Eitle
(86) International application number: PCT/JP2023/046989
(87) International publication number: WO 2024/150686

(57) **Abstract**

A primary object is to provide an improvement in manufacturing method of a carbon fiber sheet molding compound. The manufacturing method of a carbon fiber sheet molding compound comprises feeding a continuous carbon fiber bundle drawn from a package to a chopper through a guide tube, subjecting the continuous carbon fiber bundle to a loosening treatment before passing through the guide tube, dropping chopped carbon fiber bundles generated by cutting the continuous carbon fiber bundle with the chopper, onto a moving carrier film to form a random mat, and impregnating the random mat with a paste comprising a thermosetting resin composition.

## Description

### [Technical Field]

The present invention mainly relates to a manufacturing method of a carbon fiber sheet molding compound and a manufacturing apparatus of a carbon fiber sheet molding compound.

Priority is claimed on Japanese Patent Application No. 2023-2937, filed January 12, 2023, the contents of which is incorporated herein by reference.

### [Background Art]

A carbon fiber reinforced plastic (CFRP) is a composite material in which carbon fibers are used as a reinforcing material. The CFRP is used in recent years as a component of various transportation equipment including automobiles, ships, railway vehicles, manned aircraft, and unmanned aircraft, because the CFRP is high in strength and light in weight.

A carbon fiber sheet molding compound (hereinafter, also referred to as "CF-SMC") is one of an intermediate material used for molding the CFRP product.

The CF-SMC is manufactured by forming a random mat with chopped carbon fiber bundles which are obtained by cutting a continuous carbon fiber bundle short and impregnating the random mat with a paste of a thermosetting resin composition.

A technique has been proposed in which a continuous carbon fiber bundle before being cut by a chopper is processed with a roll with protrusions when manufacturing a composite material reinforced with the chopped carbon fiber bundles. When the continuous carbon fiber bundle is cut after the processing to loosen the continuous carbon fiber bundle, a large number of chopped carbon fiber bundles having a smaller bundle size than a bundle size of the continuous carbon fiber bundle before the cutting and having a high reinforcement effect are generated (Patent Document 1). The bundle size of the carbon fiber bundle means the number of carbon fiber filaments constituting the carbon fiber bundle (the same applies hereinafter).

### [Citation List]

### [Patent Documents]

[Patent Document 1]
United States Patent Application Publication No. 2012/ 0213997

### [Summary of Invention]

### [Technical Problem]

An object of the present invention is to provide an improvement in manufacturing method of a carbon fiber sheet molding compound.

Another object of the present invention is to provide an improvement in manufacturing apparatus of a carbon fiber sheet molding compound.

The object achieved by each embodiment according to the present invention may be disclosed explicitly or implicitly in the present specification.

### [Solution to Problem]

According to one aspect of the present invention, a manufacturing method for a carbon fiber sheet molding compound is provided, comprising:
feeding a continuous carbon fiber bundle drawn from a package to a chopper through a guide tube;
subjecting the continuous carbon fiber bundle to a loosening treatment before passing through the guide tube;
dropping chopped carbon fiber bundles generated by cutting the continuous carbon fiber bundle with the chopper, onto a moving carrier film to form a random mat; and
impregnating the random mat with a paste comprising a thermosetting resin composition.

According to another aspect of the present invention, a manufacturing method for a carbon fiber sheet molding compound is provided, comprising:
feeding a continuous carbon fiber bundle drawn from a package to a chopper;
subjecting the continuous carbon fiber bundle to a loosening treatment before cutting with the chopper;
dropping chopped carbon fiber bundles generated by cutting the continuous carbon fiber bundle with the chopper, onto a moving carrier film to form a random mat; and
impregnating the random mat with a paste comprising a thermosetting resin composition,
in which a moving distance of the continuous carbon fiber bundle from the loosening treatment to the cutting with the chopper is more than 3 m.

According to another aspect of the present invention, a manufacturing method for a carbon fiber sheet molding compound is provided, comprising:
dropping chopped carbon fiber bundles generated by cutting a continuous carbon fiber bundle with a chopper, onto a moving carrier film to form a random mat;
impregnating the random mat with a paste comprising a thermosetting resin composition;
subjecting the continuous carbon fiber bundle to a loosening treatment before cutting with the chopper; and
dispersing the chopped carbon fiber bundles by a dispersing roll which is rotationally driven before being dropped onto the carrier film.

According to another aspect of the present invention, a manufacturing method for a carbon fiber sheet molding compound is provided, comprising:
dropping chopped carbon fiber bundles generated by cutting a continuous carbon fiber bundle with a chopper, onto a moving carrier film to form a random mat;
impregnating the random mat with a paste comprising a thermosetting resin composition; and
partitioning a space where the chopped carbon fiber bundles are dropped onto the carrier film by at least one partition into a plurality of regions along a T direction,
in which the at least one partition is formed of metal and is grounded.

According to another aspect of the present invention, a manufacturing apparatus for a carbon fiber sheet molding compound is provided, comprising:
a chopper which is disposed above a moving path of a carrier film;
a guide tube through which a continuous carbon fiber bundle drawn from a package is fed to the chopper; and
a bundle loosener which is disposed on an upstream side of the guide tube and is used for loosening the continuous carbon fiber bundle.

According to another aspect of the present invention, a manufacturing apparatus for a carbon fiber sheet molding compound is provided, comprising:
a chopper which is disposed above a moving path of a carrier film; and
a bundle loosener which is used for loosening a continuous carbon fiber bundle drawn out from a package and fed to the chopper,
in which a distance from the bundle loosener to the chopper along a moving route of the continuous carbon fiber bundle is more than 3 m.

According to another aspect of the present invention, a manufacturing apparatus for a carbon fiber sheet molding compound is provided, comprising:
a chopper which is disposed above a moving path of a carrier film;
a bundle loosener which is used for loosening a continuous carbon fiber bundle drawn out from a package and fed to the chopper; and
a dispersing roll which is rotationally driven to disperse chopped carbon fiber bundles generated by cutting the continuous carbon fiber bundle with the chopper.

According to another aspect of the present invention, a manufacturing apparatus for a carbon fiber sheet molding compound is provided, comprising:
a chopper which is disposed above a moving path of a carrier film; and
at least one partition which is formed of a metal and grounded,
in which, by the at least one partition, a space where chopped carbon fiber bundles generated by cutting the continuous carbon fiber bundle with the chopper is dropped onto the moving path are partitioned into a plurality of regions along a T direction.

### [Effects]

According to the preferred embodiments, an improvement is provided by way of such manufacturing methods for a carbon fiber sheet molding compound or a manufacturing apparatus for a carbon fiber sheet molding compound.

### [Brief Description of Drawings]

FIG. 1 shows a configuration of a CF-SMC manufacturing apparatus according to an embodiment.
FIG. 2 shows an example of a roll with protrusions.
FIG. 3 shows a state in which a continuous carbon fiber bundle is meshed with a gear pair consisting of two spur gears meshing with each other.
FIG. 4 shows a state in which a distance between two gears forming the gear pair is increased in order to allow a spliced portion between continuous carbon fiber bundles to pass through the two gears.
FIG. 5 shows a bundle loosener in which a continuous carbon fiber bundle to be processed at a time in one gear pair is only one.
FIG. 6 shows a configuration of a chopper.
FIG. 7 shows an example of a pin roll.
FIG. 8 shows an example of a cage roll and a state in which the cage roll is viewed from a direction parallel to a rotation axis.
FIG. 9 shows a case in which the cage roll of FIG. 8 is viewed from a direction perpendicular to the rotation axis.
FIG. 10 shows a case in which a booth is provided and a main portion of a pin roll-type dispersing roll is disposed in the booth; a moving direction of a first carrier film is a direction from the left to the right in a drawing plane.
FIG. 11 shows a case in which a booth is provided and a main portion of a pin roll-type dispersing roll is disposed in the booth; a moving direction of a first carrier film is a direction from the back toward the front in a drawing plane.
FIG. 12 shows a case in which a space where chopped carbon fiber bundles generated by cutting a continuous carbon fiber bundle with a chopper falls are partitioned into a plurality of regions along a T direction by a partition disposed below the chopper; a moving direction of a first carrier film is a direction from the back toward the front in a drawing plane.

### [Description of Embodiments]

Hereinafter, some embodiments of the present invention will be described with reference to the accompanying drawings as appropriate. Dimensional ratios in the drawings are for convenience of description, and may be different from actual ones. In addition, the same reference numerals are used in the drawings to denote the same components, and the description thereof may or may not be repeated.

### 1. Method and apparatus for manufacturing CF-SMC

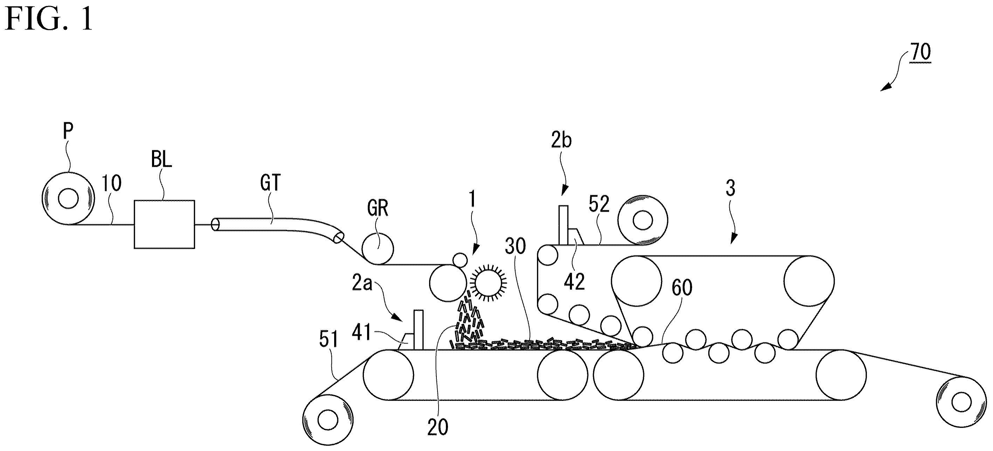

Manufacturing of CF-SMC by the manufacturing method according to the embodiment of the present invention can be performed, for example, by using a manufacturing apparatus having a basic configuration shown in FIG. 1.

A CF-SMC manufacturing apparatus 70 shown in FIG. 1 comprises a bundle loosener BL, a guide tube GT, a guide roll GR, a chopper 1, a first applicator 2a, a second applicator 2b, and an impregnator 3.

The chopper 1 is disposed above a moving path of a first carrier film 51. When the first carrier film 51 moves below the chopper 1, a surface of the first carrier film 51 is held horizontally.

In the present specification, a direction perpendicular to the moving direction of the first carrier film and horizontal may be referred to as a T direction.

In FIG. 1, the T direction is perpendicular to the drawing plane.

The manufacturing method of a CF-SMC according to the preferred embodiment will be described using a case of using the manufacturing apparatus shown in FIG. 1.

First, a continuous carbon fiber bundle 10 is drawn from a package P. The package P may or may not use a bobbin.

A bundle size of the continuous carbon fiber bundle 10 is usually 12K or more, and may be 15K or more, 18K or more, 24K or more, 36K or more, 40K or more, 48K or more, or higher. The upper limit of the bundle size of the continuous carbon fiber bundle 10 is not particularly limited, and may be 200K or less, 150K or less, 100K or less, 80K or less, 60K or less, or lower. Here, K is a symbol representing 1,000; and for example, 12K means 12,000, 48K means 48,000, and 100K means 100,000.

The continuous carbon fiber bundle 10 drawn out from the package P is loosened by being treated with the bundle loosener BL, before being passed through the guide tube GT. The loosening of the carbon fiber bundle means weakening binding between the carbon fiber filaments constituting the bundle. In the carbon fiber bundle, the carbon fiber filaments are combined with each other through a resin referred to as a sizing agent. Accordingly, the carbon fiber bundle can be loosened by applying a mechanical force from the outside to partially break the binding.

Chopped carbon fiber bundles obtained by cutting the loosened continuous carbon fiber bundle comprise a larger number of chopped carbon fiber bundles having a smaller bundle size than chopped carbon fiber bundles obtained by cutting the same continuous carbon fiber bundle without the loosening. This is because the loosened continuous carbon fiber bundles are easily divided into a plurality of bundles when cut.

It is well known among those skilled in the art that the finer chopped carbon fiber bundles having a smaller bundle size have a higher reinforcing effect when used for CFRP, as disclosed in United States Patent Application Publication No. 2012/ 0213997 above.

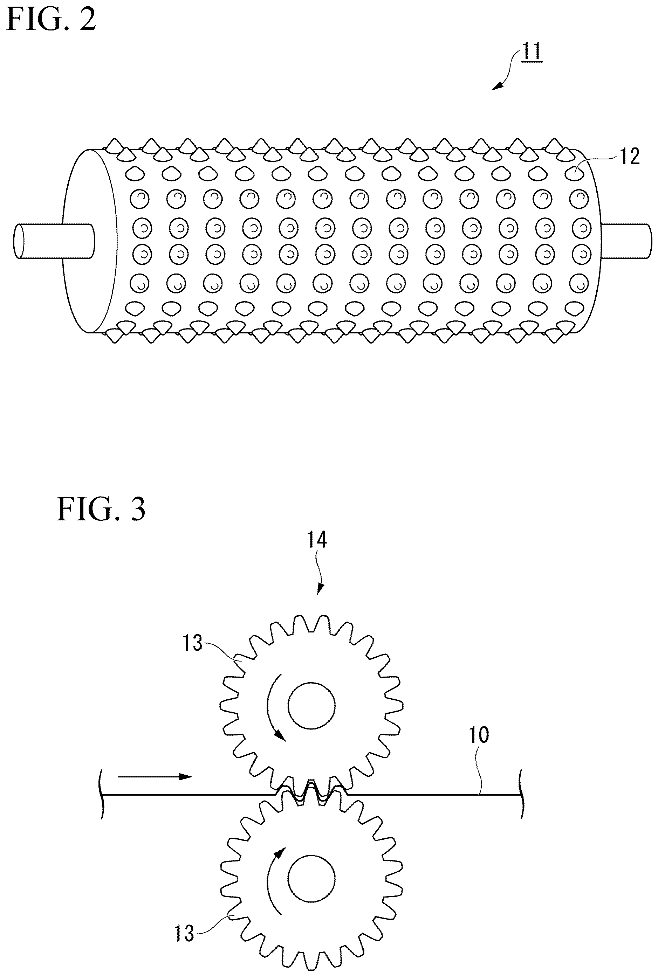

The bundle loosener according to the example may comprise a means for piercing the continuous carbon fiber bundles with a protrusion. A typical example of such a means is a roll with protrusions. As shown in FIG. 2, a roll 11 with protrusions is a roll in which a large number of protrusions 12 are disposed on an outer periphery. A preferred example of the roll with protrusions includes those disclosed in United States Patent Application Publication No. 2012/ 0213997 above.

A peripheral speed of the roll with protrusions on the outer periphery is set in a range of, for example, 0.9 to 1.1 times a feed speed of the continuous carbon fiber bundle so as to be substantially equal to the feed speed.

A wrapping angle of the continuous carbon fiber bundle on the roll with protrusions is preferably 30° or more, more preferably 60° or more, and still more preferably 90° or more. A sufficient tension is applied to the continuous carbon fiber bundle so that the protrusions reliably pierce the continuous carbon fiber bundle.

It is preferable that a disposition pattern of the plurality of protrusions on the surface of the roll with protrusions has periodicity in a circumferential direction and an axial direction. A period in the circumferential direction is preferably 10 mm or less, more preferably 5 mm or less. A period in the axial direction is preferably 5 mm or less, and more preferably 3 mm or less. The lower limit of each period is not particularly limited, and may be, for example, 1 mm or more.

The plurality of continuous carbon fiber bundles can be fed to one roll with protrusions to be parallel to each other and can be simultaneously loosened.

The bundle loosener may further comprise a means for spreading the continuous carbon fiber bundles on the upstream side or the downstream side of the means for piercing the continuous carbon fiber bundles with the protrusions. Examples of the means for spreading the carbon fiber bundles include a spreader roll and a spreader bar.

The bundle loosener according to the example may have a gear pair consisting of two gears meshing with each other. The two gears are preferably spur gears. As shown in FIG. 3, when the continuous carbon fiber bundle 10 is meshed with a gear pair 14 consisting of two gears 13 and 13, the continuous carbon fiber bundle 10 is bent at a small radius. Accordingly, the binding between the filaments through the sizing agent is partially broken, and thus the continuous carbon fiber bundle is loosened. The gear pair may be rotated passively and does not need to be actively rotated by being connected to a power source.

According to the method using the gear pair, the continuous carbon fiber bundle can be bent at a small radius without particularly applying tension. That is, the continuous carbon fiber bundle can be easily loosened without introducing a tension applying mechanism.

A material of the two gears constituting the gear pair may be a polymer or a metal. A tooth depth (difference between a tooth root circle radius and a tooth tip circle radius) of each gear is, for example, 1 to 10 mm, and may be 2 to 5 mm. A length obtained by dividing a circumferential length of the tooth tip circle of each gear by the number of teeth (pitch between teeth along the circumference of the tip circle) is, for example, 1 to 10 mm, and may be 3 to 7 mm. In an example, in each gear, the tooth depth can be set to approximately 3.5 mm, and the length obtained by dividing the circumferential length of the tooth tip circle by the number of teeth can be set to approximately 5 mm.

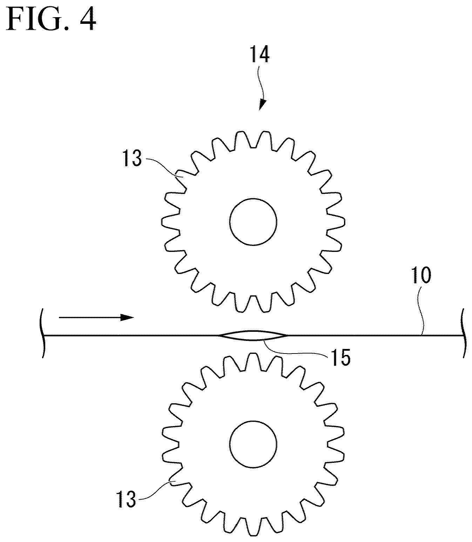

The CF-SMC can be continuously manufactured without stopping the line each time the package is emptied, by splicing an end of the continuous carbon fiber bundle drawn from one package and a beginning of the continuous carbon fiber bundle drawn from the subsequent package to be used. However, a spliced portion between the continuous carbon fiber bundles is thicker than other parts, so that the spliced portion cannot be meshed with the gear pair. Therefore, in the preferred example, as shown in FIG. 4, the distance between the two gears 13 and 13 forming the gear pair 14 may be widened only when a spliced portion 15 passes through the two gears.

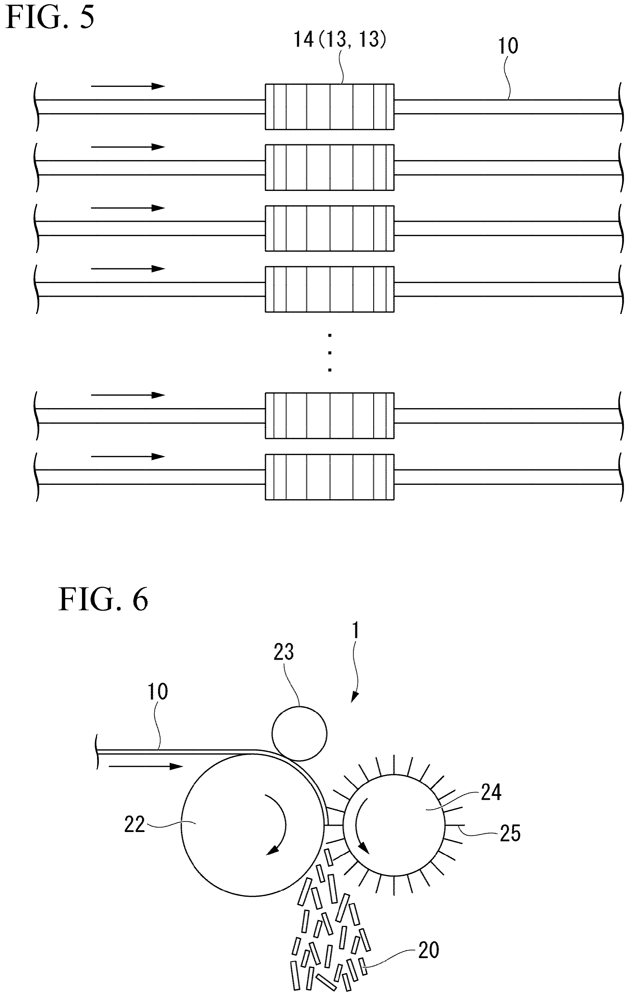

As shown in FIG. 5, it is preferable that only one continuous carbon fiber bundle 10 to be processed at a time by one gear pair 14 is provided. Therefore, in order to simultaneously perform the loosening treatment of N continuous carbon fiber bundles, it is preferable to install at least N pieces of the gear pairs in the bundle loosener. In this manner, when only a spliced portion of one of the N continuous carbon fiber bundles passes through the bundle loosener at a certain timing, it is sufficient to widen the interval between the two gears constituting the gear pair which processes the continuous carbon fiber bundle.

The bundle loosener according to the example may loosen the tension by passing the continuous carbon fiber bundle through a bent path formed by a roller and/or a bar after applying a sufficient tension to the continuous carbon fiber bundle. The bundle loosener may also have an action of expanding the carbon fiber bundle.

Since a space between a downstream end of the guide tube GT and the chopper 1 is limited, when the bundle loosener BL is installed in the space, not only is it inconvenient when adjusting, maintaining and inspecting, or repairing the bundle loosener, but also it is difficult to adjust, maintain and inspect, or repair the chopper.

On the other hand, since there is often a space on an upstream side of the guide tube GT, the adjustment, maintenance and inspection, repair, and the like of the bundle loosener BL are much easier to perform when the bundle loosener is disposed in the space. This is extremely important in a bundle loosener of a continuous carbon fiber bundle in which the continuous carbon fiber bundle is meshed with a gear pair, when the same number of gear pairs as the number of continuous carbon fiber bundles to be processed are installed.

In the treatment for loosening the continuous carbon fiber bundle, the fiber filaments are difficult to be cut. Therefore, the problem that the shorten carbon fiber filaments agglomerate in the guide tube to be cotton dust does not become more serious by installing the bundle loosener on the upstream side of the guide tube.

The continuous carbon fiber bundle 10 loosened by the bundle loosener BL is fed to the chopper 1 through the guide tube GT.

A material of the guide tube is not limited and may be a polymer or a metal. A length of the guide tube GT can be appropriately determined according to a distance from an installation location of the bundle loosener BL to the chopper 1.

In an example, the length of the guide tube may be 3 m or more, 5 m or more, or 7 m or more. This means that a moving distance of the continuous carbon fiber bundle 10 from the loosening treatment in the bundle loosener BL until the continuous carbon fiber bundle 10 is cut by the chopper 1, in other words, a distance from the bundle loosener BL to the chopper 1 along a moving route of the continuous carbon fiber bundle 10 can be more than 3 m, further more than 5 m, and further more than 7 m.

The upper limit of the length of the guide tube is not particularly limited, but in most cases, 15 m or less or 10 m or less is sufficient. When the guide tube is longer than necessary, it is difficult to clean the inside of the guide tube.

As an example shown in FIG. 6, the chopper 1 comprises a receiving roll 22 which also serves as a feed roll, a pinch roll 23, and a cutter roll 24. An outer periphery of the receiving roll 22 is formed of rubber. The continuous carbon fiber bundle 10 is cut by being pressed against the receiving roll 22 by a blade 25 attached to an outer periphery of a cutter roll 24.

A fiber length of carbon fibers comprised in chopped carbon fiber bundles 20 is, for example, within a range of 5 to 100 mm, preferably within a range of 5 to 60 mm and more preferably within a range of 10 to 30 mm.

The chopped carbon fiber bundles 20 generated by cutting the continuous carbon fiber bundle 10 with the chopper 1 fall toward the moving first carrier film 51. The chopped carbon fiber bundles 20 which have fallen form a random mat 30 on the first carrier film 51.

On the upstream side of a place where the chopped carbon fiber bundles 20 fall, a paste 41 of a thermosetting resin composition is applied onto an upper surface of the first carrier film 51 by the first applicator 2a. A viscosity of the paste is preferably adjusted to be within a range of 1 to 30 Pa·s at 25°C. A paste 42 having the same formulation as the paste 41 is applied onto a second carrier film 52 by the second applicator 2b.

The first carrier film 51 and the second carrier film 52 are laminated such that the surfaces onto which the pastes 41 and 42 are applied face each other with the random mat 30 interposed therebetween, thereby forming a laminate 60.

The laminate 60 is compressed by the impregnator 3 and then is wound around a bobbin. In another example, the laminate 60 may be folded and stored in a container.

When the laminate 60 is compressed by the impregnator 3, the random mat 30 is impregnated with the paste 41 and 42. The CF-SMC is completed by thickening of the paste after the impregnation. It is common that a thickener is blended in the pastes 41 and 42 so that the CF-SMC has an appropriate tacking and hardness. An amount of the thickener is adjusted so that the pastes 41 and 42 are not excessively thickened before the impregnation.

Examples of a material of the first carrier film and the second carrier film include polyolefins such as polyethylene and polypropylene, polyvinylidene chloride, vinyl chloride, and polyamide. The first carrier film and the second carrier film may each be a multilayer film.

For example, the first carrier film and the second carrier film may have a thickness in a range of 10 µm or more and 500 µm or less. For example, the first carrier film and the second carrier film may have a width in a range of 0.5 m or more and 1.5 m or less.

In one example, a liquid epoxy resin, an epoxy curing agent, a thickener, and an optional component are blended in the paste comprising the thermosetting resin composition. Examples of the optional component include a low shrinkage agent, an internal mold release agent, a colorant, a flame retardant, an antioxidant, and a modifier comprising rubber, an elastomer, or a thermoplastic resin.

In another example, the paste comprising the thermosetting resin composition is blended with at least one of a vinyl ester resin and an unsaturated polyester resin, a reactive diluent, a polymerization initiator, a thickening agent, and an optional component. The reactive diluent is a liquid vinyl compound, and examples thereof include styrene and various (meta)acrylates. Examples of the optional component include a polymerization inhibitor, a low shrinkage agent, an internal mold release agent, a colorant, a flame retardant, an antioxidant, and a modifier comprising rubber, an elastomer, or a thermoplastic resin.

In the manufacturing method of the CF-SMC described above, the following modification can be further adopted.

In a modification example, the chopped carbon fiber bundles may be dispersed by using a dispersing roll which is rotationally driven and then dropped on the first carrier film. A rotation axis of the dispersing roll is preferably parallel to the T direction.

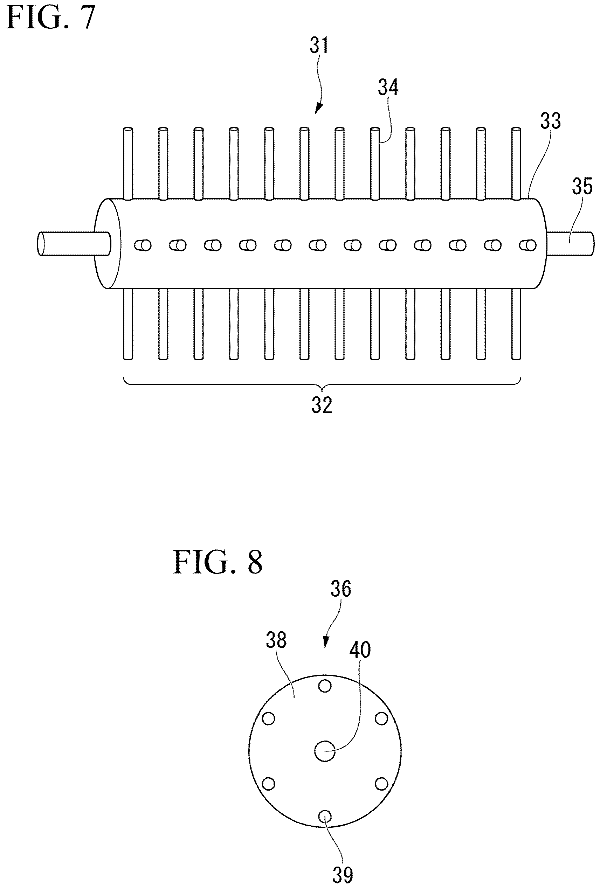

An example of the dispersing roll is a pin roll (also referred to as a spike roll). As an example shown in FIG. 7, a main portion 32 of a pin roll 31 has a structure in which a plurality of pins 34 protrude from a surface of a cylinder 33. Directions of the plurality of pins 34 are all perpendicular to the rotation axis. A shaft 35 penetrates a center of the cylinder 33.

When the pin roll 31 is rotated, the pins 34 of the main portion 32 strike the chopped carbon fiber bundles.

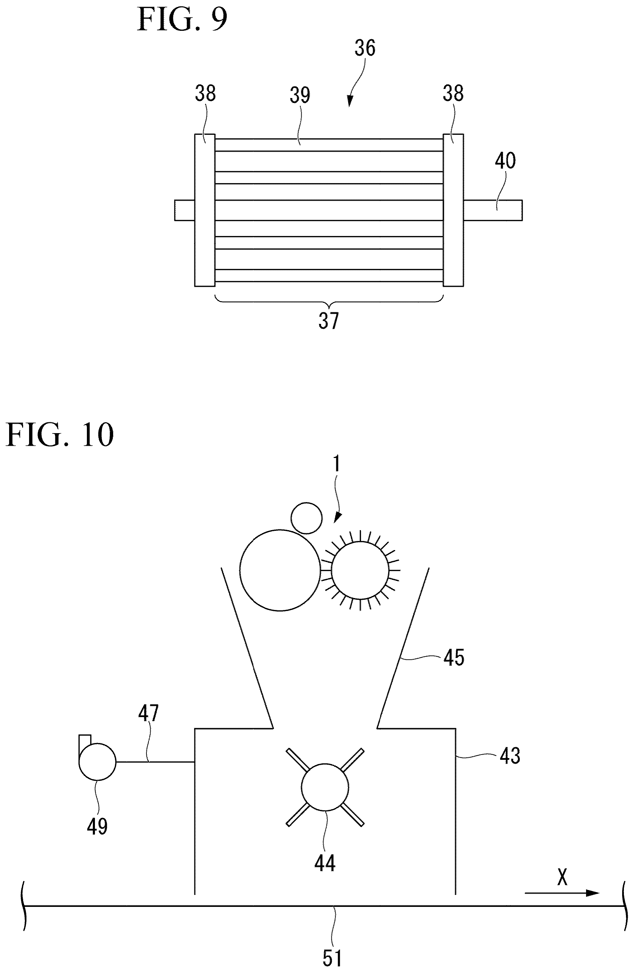

Another example of the dispersing roll is a cage roll. As an example shown in FIGS. 8 and 9, a main portion 37 of a cage roll 36 has a structure in which a plurality of rods 39 are bridged between a pair of a disk 38 and a disk 38, which share a rotation axis. The rod 39 can be replaced with a rod having a non-circular cross section such as a square rod or a flat rod, or a taut wire. A shaft 40 penetrates a center of each disk.

When the cage roll is rotated, the rods of the main portion strike the chopped carbon fiber bundles.

A characteristic of the dispersing roll, common to the pin roll and the cage roll, is that a shape of the main portion has n-fold rotational symmetry with the rotation axis (center axis of the shaft) as the center, where n is an integer of 1 or more and finite. n is preferably 3 or more and 72 or less, and may be 45 or less, 36 or less, or 24 or less.

For example, in the pin roll 31 shown in FIG. 7, n is 4; and in the cage roll 36 shown in FIGS. 8 and 9, n is 6.

When the roll has the feature, even a roll other than the pin roll and the cage roll can apply a physical impact to the chopped carbon fiber bundles when being rotated.

When the chopped carbon fiber bundles are dispersed by using the rotating dispersing roll, the chopped carbon fiber bundles are divided into carbon fiber bundles having a smaller size by the physical impact, which is effective. When the continuous carbon fiber bundles are loosened before being cut by the chopper, this effect becomes more remarkable.

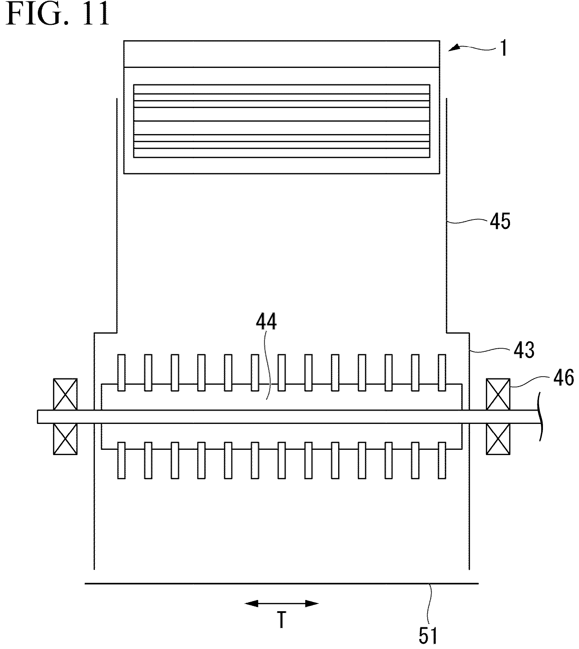

On the other hand, when the chopped carbon fiber bundles in which the binding between the fiber filaments is weakened are physically impacted, fine carbon fiber dust which can float in the air is likely to be generated. In order to prevent the carbon fiber dust from diffusing, as shown in FIGS. 10 and 11, it is preferable to provide a booth 43, dispose the main portion of the dispersing roll 44 therein, provide an opening in a ceiling of the booth, and guide the chopped carbon fiber bundles to an opening by using a shooter 45. An arrow X shown in FIG. 10 indicates the moving direction of the first carrier film 51. Both arrows T shown in FIG. 11 indicate the T direction.

The width of the booth in the T direction is preferably narrower than the width of the first carrier film 51 as in the example shown in FIG. 11 but is not limited thereto.

It is desirable that the end portion of the shaft of the dispersing roll is caused to protrude to the outside of the booth through the opening provided in the side wall of the booth (wall parallel to the moving direction of the first carrier film). In the example of FIG. 11, a shaft bearing 46 which supports the dispersing roll 44 is disposed outside the booth 43, and substantially only the main portion of the dispersing roll 44 is disposed inside the booth 43.

Furthermore, in order to suppress outflow of the carbon fiber dust to the outside of the booth, it is desirable to continuously remove the carbon fiber dust from the inside of the booth by using a dust collector during the manufacturing of the CF-SMC. In the example of FIG. 10, the carbon fiber dust can be removed from the inside of the booth 43 by using a dust collector 49 connected to the booth 43 through a hose 47. Although not limited, a preferred example of the dust collector is a dust collector comprising a separator which separates dust and air by using centrifugal force, that is, a cyclone dust collector. A suction port connected to the dust collector is preferably provided on any one or both of the wall surface of the booth and the inside of the booth.

Carbon fiber dust which has leaked to the outside of the booth may be removed by the dust collector.

The following can be given as reasons the diffusion of the carbon fiber dust should be prevented.
· The carbon fiber dust may be deposited at a specific place after floating on airflow to form cotton waste; when the cotton waste is mixed into the random mat, it causes poor impregnation.
· The carbon fiber dust may contaminate a mechanical element included in the SMC manufacturing apparatus and may cause a malfunction in the operation of the mechanical element.
· The carbon fiber dust degrades the working environment in the room where the SMC manufacturing apparatus is installed.
· The carbon fiber dust has conductivity and thus may cause a problem in the operation of the electrical and electronic equipment attached to the SMC manufacturing apparatus and the electrical and electronic equipment used indoors where the SMC manufacturing apparatus is installed.

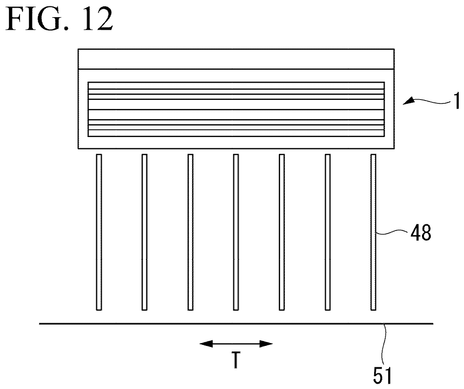

In another modification example, as shown in FIG. 12, space where the chopped carbon fiber bundles generated by cutting the continuous carbon fiber bundle with the chopper 1 falls can be divided into a plurality of regions along the T direction by at least one partition 48 disposed below the chopper 1. It is useful to disturb the movement of the chopped carbon fiber bundles in the T direction by the partition while the chopped carbon fiber bundles fall in the space in order to make an areal weight of the random mat formed on the first carrier film uniform in the T direction.

When the above-described dispersing roll is disposed below the chopper, the partition is disposed below the dispersing roll, so that the adverse effect of the airflow generated by the rotation of the dispersing roll on the uniformity of the areal weight of the random mat can be reduced.

When the fiber dust adheres to the partition due to action of static electricity, the adhered fiber dust may agglomerate to form cotton waste. In order to prevent the cotton waste, it is desirable to form the partition with a metal and ground the partition. A preferred example of the metal includes an aluminum alloy and stainless steel, and the aluminum alloy is more preferable in view of high conductivity.

When the partition is scratched, the fiber dust is likely to be caught in the scratch, and as a result, the cotton waste is likely to be formed. Since the aluminum alloy plate is easily damaged, non-electrolytic nickel plating may be performed in order to increase a surface hardness and make it difficult to be scratched.

### 2. Summary of embodiments

In summary, the embodiments of the present invention include the following. However, the present invention is not limited to the following.

[Embodiment 1] A manufacturing method of a carbon fiber sheet molding compound, comprising:
feeding a continuous carbon fiber bundle drawn from a package to a chopper through a guide tube;
subjecting the continuous carbon fiber bundle to a loosening treatment before passing through the guide tube;
dropping chopped carbon fiber bundles generated by cutting the continuous carbon fiber bundle with the chopper, onto a moving carrier film to form a random mat; and
impregnating the random mat with a paste comprising a thermosetting resin composition.

[Embodiment 2] The manufacturing method according to the embodiment 1,
in which the loosening treatment comprises piercing the continuous carbon fiber bundle with a protrusion.

[Embodiment 3] The manufacturing method according to the embodiment 2,
in which a roll with protrusions is used for the loosening treatment.

[Embodiment 4] The manufacturing method according to any one of the embodiments 1 to 3,
in which the loosening treatment comprises bending the continuous carbon fiber bundle.

[Embodiment 5] The manufacturing method according to the embodiment 4,
in which a gear pair consisting of two gears meshing with each other, each of the gears may be a spur gear, is used for the loosening treatment.

[Embodiment 6] The manufacturing method according to any one of the embodiments 1 to 5,
in which the chopped carbon fiber bundles are dispersed by a dispersing roll which is rotationally driven and then dropped onto the carrier film.

[Embodiment 7] The manufacturing method according to the embodiment 6, further comprising:
providing a booth to dispose a main portion of the dispersing roll in the booth; and
using a shooter to guide the chopped carbon fiber bundles to an opening provided in a ceiling of the booth.

[Embodiment 8] The manufacturing method according to the embodiment 6 or 7, further comprising:
removing fiber dust generated in accordance with the dispersion of the chopped carbon fiber bundles by the dispersing roll, using a dust collector.

[Embodiment 9] The manufacturing method according to the embodiment 7, further comprising:
removing fiber dust generated in accordance with the dispersion of the chopped carbon fiber bundles by the dispersing roll, using a dust collector,
in which a suction port connected to the dust collector is provided on any one or both of a wall surface of the booth and an inside of the booth.

[Embodiment 10] The manufacturing method according to any one of the embodiments 1 to 9, further comprising:
partitioning a space where the chopped carbon fiber bundles are dropped onto the carrier film by at least one partition into a plurality of regions along a T direction.

[Embodiment 11] The manufacturing method according to the embodiment 10,
in which the at least one partition is formed of metal and is grounded.

[Embodiment 12] The manufacturing method according to any one of the embodiments 1 to 11,
in which a length of the guide tube is 3 m or more and may be 5 m or more or 7 m or more.

[Embodiment 13] A manufacturing method of a carbon fiber sheet molding compound, comprising:
feeding a continuous carbon fiber bundle drawn from a package to a chopper;
subjecting the continuous carbon fiber bundle to a loosening treatment before cutting with the chopper;
dropping chopped carbon fiber bundles generated by cutting the continuous carbon fiber bundle with the chopper, onto a moving carrier film to form a random mat; and
impregnating the random mat with a paste comprising a thermosetting resin composition,
in which a moving distance of the continuous carbon fiber bundle from the loosening treatment to the cutting with the chopper is more than 3 m, more than 5 m, or more than 7 m.

[Embodiment 14] The manufacturing method according to the embodiment 13,
in which the loosening treatment comprises piercing the continuous carbon fiber bundle with a protrusion.

[Embodiment 15] The manufacturing method according to the embodiment 14,
in which a roll with protrusions is used for the loosening treatment.

[Embodiment 16] The manufacturing method according to any one of the embodiments 13 to 15,
in which the loosening treatment comprises bending the continuous carbon fiber bundle.

[Embodiment 17] The manufacturing method according to the embodiment 16,
in which a gear pair consisting of two gears meshing with each other, each of the gears may be a spur gear, is used for the loosening treatment.

[Embodiment 18] The manufacturing method according to any one of the embodiments 13 to 17,
in which the chopped carbon fiber bundles are dispersed by a dispersing roll which is rotationally driven and then dropped onto the carrier film.

[Embodiment 19] The manufacturing method according to the embodiment 18, further comprising:
providing a booth to dispose a main portion of the dispersing roll in the booth; and
using a shooter to guide the chopped carbon fiber bundles to an opening provided in a ceiling of the booth.

[Embodiment 20] The manufacturing method according to the embodiment 18 or 19, further comprising:
removing fiber dust generated in accordance with the dispersion of the chopped carbon fiber bundles by the dispersing roll, using a dust collector.

[Embodiment 21] The manufacturing method according to the embodiment 19, further comprising:
removing fiber dust generated in accordance with the dispersion of the chopped carbon fiber bundles by the dispersing roll, using a dust collector,
in which a suction port connected to the dust collector is provided on any one or both of a wall surface of the booth and an inside of the booth.

[Embodiment 22] The manufacturing method according to any one of the embodiments 13 to 21, further comprising:
partitioning a space where the chopped carbon fiber bundle is dropped onto the carrier film by at least one partition into a plurality of regions along a T direction.

[Embodiment 23] The manufacturing method according to the embodiment 22, in which the at least one partition is formed of metal and is grounded.

[Embodiment 24] The manufacturing method according to any one of the embodiments 13 to 23,
in which the continuous carbon fiber bundle is fed to the chopper through a guide tube, and
the loosening treatment is performed on the continuous carbon fiber bundle before the continuous carbon fiber bundle is passed through the guide tube.

[Embodiment 25] A manufacturing method of a carbon fiber sheet molding compound, comprising:
dropping chopped carbon fiber bundles generated by cutting a continuous carbon fiber bundle with a chopper, onto a moving carrier film to form a random mat;
impregnating the random mat with a paste comprising a thermosetting resin composition;
subjecting the continuous carbon fiber bundle to a loosening treatment before cutting with the chopper; and
dispersing the chopped carbon fiber bundles by a dispersing roll which is rotationally driven before being dropped onto the carrier film.

[Embodiment 26] The manufacturing method according to the embodiment 25, further comprising:
providing a booth to dispose a main portion of the dispersing roll in the booth; and
using a shooter to guide the chopped carbon fiber bundles to an opening provided in a ceiling of the booth.

[Embodiment 27] The manufacturing method according to the embodiment 25 or 26, further comprising:
removing fiber dust generated in accordance with the dispersion of the chopped carbon fiber bundles by the dispersing roll, using a dust collector.

[Embodiment 28] The manufacturing method according to the embodiment 26, further comprising:
removing fiber dust generated in accordance with the dispersion of the chopped carbon fiber bundles by the dispersing roll, using a dust collector,
in which a suction port connected to the dust collector is provided on any one or both of a wall surface of the booth and an inside of the booth.

[Embodiment 29] The manufacturing method according to any one of the embodiments 25 to 28,
in which the loosening treatment comprises piercing the continuous carbon fiber bundle with a protrusion.

[Embodiment 30] The manufacturing method according to the embodiment 29,
in which a roll with protrusions is used for the loosening treatment.

[Embodiment 31] The manufacturing method according to any one of the embodiments 25 to 30,
in which the loosening treatment comprises bending the continuous carbon fiber bundle.

[Embodiment 32] The manufacturing method according to the embodiment 31,
in which a gear pair consisting of two gears meshing with each other, each of the gears may be a spur gear, is used for the loosening treatment.

[Embodiment 33] The manufacturing method according to any one of the embodiments 25 to 32, further comprising:
partitioning a space where the chopped carbon fiber bundles are dropped onto the carrier film by at least one partition into a plurality of regions along a T direction.

[Embodiment 34] The manufacturing method according to the embodiment 33,
in which the at least one partition is formed of metal and is grounded.

[Embodiment 35] A manufacturing method of a carbon fiber sheet molding compound, comprising:
dropping chopped carbon fiber bundles generated by cutting a continuous carbon fiber bundle with a chopper, onto a moving carrier film to form a random mat;
impregnating the random mat with a paste comprising a thermosetting resin composition; and
partitioning a space where the chopped carbon fiber bundle is dropped onto the carrier film by at least one partition into a plurality of regions along a T direction,
in which the at least one partition is formed of metal and is grounded.

[Embodiment 36] The manufacturing method according to the embodiment 35,
in which the chopped carbon fiber bundles are dispersed by a dispersing roll which is rotationally driven and then dropped onto the carrier film.

[Embodiment 37] The manufacturing method according to the embodiment 36, further comprising:
providing a booth to dispose a main portion of the dispersing roll and the at least one partition in the booth; and
using a shooter to guide the chopped carbon fiber bundles to an opening provided in a ceiling of the booth.

[Embodiment 38] The manufacturing method according to the embodiment 36 or 37, further comprising:
removing fiber dust generated in accordance with the dispersion of the chopped carbon fiber bundles by the dispersing roll, using a dust collector.

[Embodiment 39] The manufacturing method according to the embodiment 37, further comprising:
removing fiber dust generated in accordance with the dispersion of the chopped carbon fiber bundles by the dispersing roll, using a dust collector,
in which a suction port connected to the dust collector is provided on any one or both of a wall surface of the booth and an inside of the booth.

[Embodiment 40] The manufacturing method according to any one of the embodiments 35 to 39, further comprising:
subjecting the continuous carbon fiber bundle to a loosening treatment before cutting with the chopper.

[Embodiment 41] The manufacturing method according to the embodiment 40,
in which the loosening treatment comprises piercing the continuous carbon fiber bundle with a protrusion.

[Embodiment 42] The manufacturing method according to the embodiment 41,
in which a roll with protrusions is used for the loosening treatment.

[Embodiment 43] The manufacturing method according to any one of the embodiments 40 to 42,
in which the loosening treatment comprises bending the continuous carbon fiber bundle.

[Embodiment 44] The manufacturing method according to the embodiment 43,
in which a gear pair consisting of two gears meshing with each other, each of the gears may be a spur gear, is used for the loosening treatment.

[Embodiment 45] A manufacturing apparatus of a carbon fiber sheet molding compound, comprising:
a chopper which is disposed above a moving path of a carrier film;
a guide tube through which a continuous carbon fiber bundle drawn from a package is fed to the chopper; and
a bundle loosener which is disposed on an upstream side of the guide tube and is used for loosening the continuous carbon fiber bundle.

[Embodiment 46] The manufacturing apparatus according to the embodiment 45,
in which the bundle loosener comprises a means for piercing the continuous carbon fiber bundle with a protrusion.

[Embodiment 47] The manufacturing apparatus according to the embodiment 46,
in which the bundle loosener comprises a roll with protrusions.

[Embodiment 48] The manufacturing apparatus according to any one of the embodiments 45 to 47,
in which the bundle loosener comprises a means for bending the continuous carbon fiber bundle.

[Embodiment 49] The manufacturing apparatus according to the embodiment 48,
in which the bundle loosener comprises a gear pair consisting of two gears meshing with each other, each of the gears may be a spur gear.

[Embodiment 50] The manufacturing apparatus according to any one of the embodiments 45 to 49, further comprising:
a dispersing roll which is rotationally driven to disperse chopped carbon fiber bundles generated by cutting the continuous carbon fiber bundle with the chopper.

[Embodiment 51] The manufacturing apparatus according to the embodiment 50,
in which a main portion of the dispersing roll is disposed in a booth, and a shooter for guiding the chopped carbon fiber bundles is provided at an opening provided in a ceiling of the booth.

[Embodiment 52] The manufacturing apparatus according to the embodiment 51,
in which a suction port connected to a dust collector is provided on any one or both of a wall surface of the booth and an inside of the booth.

[Embodiment 53] The manufacturing apparatus according to any one of the embodiments 45 to 52,
in which, by at least one partition, a space where chopped carbon fiber bundles generated by cutting the continuous carbon fiber bundle with the chopper is dropped onto the moving path is partitioned into a plurality of regions along a T direction.

[Embodiment 54] The manufacturing apparatus according to the embodiment 53,
in which the at least one partition is formed of metal and is grounded.

[Embodiment 55] The manufacturing apparatus according to any one of the embodiments 45 to 54,
in which a length of the guide tube is 3 m or more and may be 5 m or more or 7 m or more.

[Embodiment 56] A manufacturing apparatus of a carbon fiber sheet molding compound, comprising:
a chopper which is disposed above a moving path of a carrier film; and
a bundle loosener which is used for loosening a continuous carbon fiber bundle drawn out from a package and fed to the chopper,
in which a distance from the bundle loosener to the chopper along a moving route of the continuous carbon fiber bundle is more than 3 m, more than 5 m, or more than 7 m.

[Embodiment 57] The manufacturing apparatus according to the embodiment 56,
in which the bundle loosener comprises a means for piercing the continuous carbon fiber bundle with a protrusion.

[Embodiment 58] The manufacturing apparatus according to the embodiment 57,
in which the bundle loosener comprises a roll with protrusions.

[Embodiment 59] The manufacturing apparatus according to any one of the embodiments 56 to 58,
in which the bundle loosener comprises a means for bending the continuous carbon fiber bundle.

[Embodiment 60] The manufacturing apparatus according to the embodiment 59,
in which the bundle loosener comprises a gear pair consisting of two gears meshing with each other, each of the gears may be a spur gear.

[Embodiment 61] The manufacturing apparatus according to any one of the embodiments 56 to 60, further comprising:
a dispersing roll which is rotationally driven to disperse chopped carbon fiber bundles generated by cutting the continuous carbon fiber bundle with the chopper.

[Embodiment 62] The manufacturing apparatus according to the embodiment 61,
in which a main portion of the dispersing roll is disposed in a booth, and a shooter for guiding the chopped carbon fiber bundles is provided at an opening provided in a ceiling of the booth.

[Embodiment 63] The manufacturing apparatus according to the embodiment 62,
in which a suction port connected to a dust collector is provided on any one or both of a wall surface of the booth and an inside of the booth.

[Embodiment 64] The manufacturing apparatus according to any one of the embodiments 56 to 63,
in which, by at least one partition, a space where chopped carbon fiber bundles generated by cutting the continuous carbon fiber bundle with the chopper is dropped onto the moving path are partitioned into a plurality of regions along a T direction.

[Embodiment 65] The manufacturing apparatus according to the embodiment 64,
in which the at least one partition is formed of metal and is grounded.

[Embodiment 66] The manufacturing apparatus according to any one of the embodiments 56 to 65, further comprising:
a guide tube through which a continuous carbon fiber bundle drawn from a package is fed to the chopper,
in which the bundle loosener is disposed on an upstream side of the guide tube.

[Embodiment 67] A manufacturing apparatus of a carbon fiber sheet molding compound, comprising:
a chopper which is disposed above a moving path of a carrier film;
a bundle loosener which is used for loosening a continuous carbon fiber bundle drawn out from a package and fed to the chopper; and
a dispersing roll which is rotationally driven to disperse chopped carbon fiber bundles generated by cutting the continuous carbon fiber bundle with the chopper.

[Embodiment 68] The manufacturing apparatus according to the embodiment 67,
in which the dispersing roll is disposed in a booth, and a shooter for guiding the chopped carbon fiber bundles is provided at an opening provided in a ceiling of the booth.

[Embodiment 69] The manufacturing apparatus according to the embodiment 68,
in which a suction port connected to a dust collector is provided on any one or both of a wall surface of the booth and an inside of the booth.

[Embodiment 70] The manufacturing apparatus according to any one of the embodiments 67 to 69,
in which the bundle loosener comprises a means for piercing the continuous carbon fiber bundle with a protrusion.

[Embodiment 71] The manufacturing apparatus according to the embodiment 70,
in which the bundle loosener comprises a roll with protrusions.

[Embodiment 72] The manufacturing apparatus according to any one of the embodiments 67 to 71,
in which the loosening treatment comprises a means for bending the continuous carbon fiber bundle.

[Embodiment 73] The manufacturing apparatus according to the embodiment 72,
in which the bundle loosener comprises a gear pair consisting of two gears meshing with each other, each of the gears may be a spur gear.

[Embodiment 74] The manufacturing apparatus according to any one of the embodiments 67 to 73,
in which, by at least one partition, a space where the chopped carbon fiber bundles are dropped onto the moving path is partitioned into a plurality of regions along a T direction.

[Embodiment 75] The manufacturing apparatus according to the embodiment 74,
in which the at least one partition is formed of metal and is grounded.

[Embodiment 76] A manufacturing apparatus of a carbon fiber sheet molding compound, comprising:
a chopper which is disposed above a moving path of a carrier film; and
at least one partition which is formed of a metal and grounded,
in which, by the at least one partition, a space where chopped carbon fiber bundles generated by cutting the continuous carbon fiber bundle with the chopper is dropped onto the moving path are partitioned into a plurality of regions along a T direction.

[Embodiment 77] The manufacturing apparatus according to the embodiment 76, further comprising:
a dispersing roll which is rotationally driven to disperse the chopped carbon fiber bundles.

[Embodiment 78] The manufacturing apparatus according to the embodiment 77,
in which a main portion of the dispersing roll is disposed in a booth, and a shooter for guiding the chopped carbon fiber bundles is provided at an opening provided in a ceiling of the booth.

[Embodiment 79] The manufacturing apparatus according to the embodiment 78,
in which a suction port connected to a dust collector is provided on any one or both of a wall surface of the booth and an inside of the booth.

[Embodiment 80] The manufacturing apparatus according to any one of the embodiments 76 to 79, further comprising:
a bundle loosener for loosening the continuous carbon fiber bundle before cutting with the chopper.

[Embodiment 81] The manufacturing apparatus according to the embodiment 80,
in which the bundle loosener comprises a means for piercing the continuous carbon fiber bundle with a protrusion.

[Embodiment 82] The manufacturing apparatus according to the embodiment 81,
in which the bundle loosener comprises a roll with protrusions.

[Embodiment 83] The manufacturing apparatus according to any one of the embodiments 80 to 82,
in which the bundle loosener comprises a means for bending the continuous carbon fiber bundle.

[Embodiment 84] The manufacturing apparatus according to the embodiment 83,
in which the bundle loosener comprises a gear pair consisting of two gears meshing with each other, each of the gears may be a spur gear.

[Embodiment 85] The manufacturing apparatus according to any one of the embodiments 45 to 84,
in which the carbon fiber sheet molding compound is obtained by impregnating a random mat comprising chopped carbon fiber bundles with a paste comprising a thermosetting resin composition.

[Embodiment 86] The manufacturing method according to any one of the embodiments 1 to 44, further comprising:
applying part of the paste onto one surface of the carrier film before forming the random mat on the carrier film;
forming a laminate by superimposing another carrier film, on which another part of the paste is applied onto one surface, on the carrier film with the random mat interposed between the carrier films; and
compressing the laminate for the impregnation.

[Embodiment 87] A manufacturing method of a carbon fiber sheet molding compound, comprising:
using the manufacturing apparatus according to any one of the embodiments 45 to 85.

### 3. Experimental results

Results of experiments which were performed by the present inventors will be described below.

Using a CF-SMC manufacturing apparatus comprising a distributor disposed above a moving path of a carrier film, a chopper disposed above the distributor, a plurality of guide tubes for allowing a continuous carbon fiber bundle to be fed to the chopper to pass therethrough, and a gear pair disposed one by one on an upstream side of each of the guide tubes, a random mat comprising chopped carbon fiber bundles were deposited on a carrier film onto which a resin paste was not applied.

A more detailed procedure will be described below.

Forty packages in which a continuous carbon fiber bundle with a filament number of 15K was wound around a bobbin were prepared. The continuous carbon fiber bundle drawn out from each package was subjected to a process of passing between two spur gears constituting the gear pair and was fed to the chopper through one guide tube.

Both of the two spur gears in each gear pair were made of SUS304, and a tooth width (length of tooth in an axial direction of the gear) was 20 mm, a tooth depth was 3.4 mm, a diameter of a tooth tip circle was 48 mm, and a length obtained by dividing a circumferential length of the tooth tip circle by the number of teeth was 5.0 mm. A mechanism for actively rotating the spur gear was not provided.

In each of the gear pairs, the two spur gears were meshed with each other so that a distance between axes was 46 mm. The two spur gears were passively rotated by pulling the continuous carbon fiber bundle meshed between the two spur gears by the chopper.

The guide tube was a polyethylene tube having an outer diameter of 20 mm and an inner diameter of 14 mm, and a length in a range of 3 m to 6 m. Therefore, a moving distance of each continuous carbon fiber bundle from the processing with the gear pair to the cutting with the chopper was more than 3 m.

In the distributor, two pin rolls each having a rotation axis parallel to the T direction were arranged. The two pin rolls had the same configuration, and a diameter of the cylinder was 120 mm, and a diameter and a length of pins arranged on a circumferential surface of the cylinder were 3 mm and 20 mm. The arrangement of the pins on the circumferential surface of the cylinder was periodic, and a pin density was 0.42 pins per 1 cm². A distance between the rotation axes of the two pin rolls was 150 mm.

Both of the two pin rolls in the distributor were rotated such that the pins moved downward on the side facing the other pin roller. Rotation speeds of the two pin rolls were set to be the same.

The continuous carbon fiber bundle was cut by the chopper such that a fiber length after the cutting was approximately 1 inch (25.4 mm) and was obtained as chopped carbon fiber bundles. The chopped carbon fiber bundles were dropped on the carrier film moving at a linear speed of 5 m/min while being dispersed by the distributor. The dropped chopped carbon fiber bundles were deposited on the carrier film to form a random mat.

From the random mat, a region of approximately 21 cm × 30 cm deposited near the center line of the carrier film was selected, and a weight of all the chopped carbon fiber bundles (300 pieces or more) included in the region was measured. A weight-average number of the filaments calculated based on the weight measurement was defined as the average number of filaments of the chopped carbon fiber bundles in the random mat.

The average number of filaments of the chopped carbon fiber bundles in the random mat, obtained by rotating the pin roll of the distributor at each of 800 rpm, 1,000 rpm, 1,250 rpm, and 1,500 rpm, is shown in Table 1 below. In Table 1, the average number of filaments of the chopped carbon fiber bundles is shown together with a random mat formed in the same manner as that the continuous carbon fiber bundle was formed except that the treatment using the gear pair was not performed.

**[Table 1]**

| | | Average number of filaments of chopped carbon fiber bundles in random mat | |
|---|---|---|---|
| | | With treatment using pair of gears | Without treatment using pair of gears |
| Rotation speed of pin roll in distributor | 800 rpm | 4.4K | 5.7K |
| | 1000 rpm | 4.3K | 5.1K |
| | 1250 rpm | 3.1K | 3.9K |
| | 1500 rpm | 3.0K | 3.6K |

Although the present invention was described above in accordance with specific embodiments, each embodiment is presented as an example and does not limit the scope of the present invention. Each of the embodiments described in the present specification can be variously modified to the extent that the effects of the invention are achieved and can be combined with the features described by other embodiments to a practicable extent.

### [Industrial Applicability]

The carbon fiber sheet molding compound manufactured using the manufacturing method or the manufacturing apparatus according to the embodiment can suitably be used for manufacturing CFRP parts used in various transportation equipment or industrial equipment. Examples of the transportation equipment include an automobile, a ship, a railway vehicle, a manned aircraft, and an unmanned aircraft, but are not limited thereto.

### [Reference Signs List]

1: Chopper
2a: First applicator
2b: Second applicator
3: Impregnator
10: Continuous carbon fiber bundle
20: Chopped carbon fiber bundle
30: Random mat
41, 42: Paste
51: First carrier film
52: Second carrier film
60: Laminate
BL: Bundle loosener
GT: Guide tube
GR: Guide roll

## Claims

1. A manufacturing method of a carbon fiber sheet molding compound, comprising:
feeding a continuous carbon fiber bundle drawn from a package to a chopper through a guide tube;
subjecting the continuous carbon fiber bundle to a loosening treatment before passing through the guide tube;
dropping chopped carbon fiber bundles generated by cutting the continuous carbon fiber bundle with the chopper, onto a moving carrier film to form a random mat; and
impregnating the random mat with a paste comprising a thermosetting resin composition.

2. The manufacturing method according to Claim 1,
wherein the loosening treatment comprises piercing the continuous carbon fiber bundle with a protrusion.

3. The manufacturing method according to Claim 2,
wherein a roll with protrusions is used for the loosening treatment.

4. The manufacturing method according to any one of Claims 1 to 3,
wherein the loosening treatment comprises bending the continuous carbon fiber bundle.

5. The manufacturing method according to Claim 4,
wherein a gear pair consisting of two gears meshing with each other, each of the gears may be a spur gear, is used for the loosening treatment.

6. The manufacturing method according to any one of Claims 1 to 5,
wherein the chopped carbon fiber bundles are dispersed by a dispersing roll which is rotationally driven and then dropped onto the carrier film.

7. The manufacturing method according to Claim 6, further comprising:
providing a booth to dispose a main portion of the dispersing roll in the booth; and
using a shooter to guide the chopped carbon fiber bundles to an opening provided in a ceiling of the booth.

8. The manufacturing method according to Claim 6 or 7, further comprising:
removing fiber dust generated in accordance with the dispersion of the chopped carbon fiber bundles by the dispersing roll, using a dust collector.

9. The manufacturing method according to Claim 7, further comprising:
removing fiber dust generated in accordance with the dispersion of the chopped carbon fiber bundles by the dispersing roll, using a dust collector,
wherein a suction port connected to the dust collector is provided on any one or both of a wall surface of the booth and an inside of the booth.

10. The manufacturing method according to any one of Claims 1 to 9, further comprising:
partitioning a space where the chopped carbon fiber bundles are dropped onto the carrier film by at least one partition into a plurality of regions along a T direction.

11. The manufacturing method according to Claim 10,
wherein the at least one partition is formed of metal and is grounded.

12. The manufacturing method according to any one of Claims 1 to 11,
wherein a length of the guide tube is 3 m or more and may be 5 m or more or 7 m or more.

13. A manufacturing method of a carbon fiber sheet molding compound, comprising:
feeding a continuous carbon fiber bundle drawn from a package to a chopper;
subjecting the continuous carbon fiber bundle to a loosening treatment before cutting with the chopper;
dropping chopped carbon fiber bundles generated by cutting the continuous carbon fiber bundle with the chopper, onto a moving carrier film to form a random mat; and
impregnating the random mat with a paste comprising a thermosetting resin composition,
wherein a moving distance of the continuous carbon fiber bundle from the loosening treatment to the cutting with the chopper is more than 3 m, more than 5 m, or more than 7 m.

14. The manufacturing method according to Claim 13,
wherein the loosening treatment comprises piercing the continuous carbon fiber bundle with a protrusion.

15. The manufacturing method according to Claim 14,
wherein a roll with protrusions is used for the loosening treatment.

16. The manufacturing method according to any one of Claims 13 to 15,
wherein the loosening treatment comprises bending the continuous carbon fiber bundle.

17. The manufacturing method according to Claim 16,
wherein a gear pair consisting of two gears meshing with each other, each of the gears may be a spur gear, is used for the loosening treatment.

18. The manufacturing method according to any one of Claims 13 to 17,
wherein the chopped carbon fiber bundles are dispersed by a dispersing roll which is rotationally driven, and then dropped onto the carrier film.

19. The manufacturing method according to Claim 18, further comprising:
providing a booth to dispose a main portion of the dispersing roll in the booth; and
using a shooter to guide the chopped carbon fiber bundles to an opening provided in a ceiling of the booth.

20. The manufacturing method according to Claim 18 or 19, further comprising:
removing fiber dust generated in accordance with the dispersion of the chopped carbon fiber bundles by the dispersing roll, using a dust collector.

21. The manufacturing method according to Claim 19, further comprising:
removing fiber dust generated in accordance with the dispersion of the chopped carbon fiber bundles by the dispersing roll, using a dust collector,
wherein a suction port connected to the dust collector is provided on any one or both of a wall surface of the booth and an inside of the booth.

22. The manufacturing method according to any one of Claims 13 to 21, further comprising:
partitioning a space where the chopped carbon fiber bundles are dropped onto the carrier film by at least one partition into a plurality of regions along a T direction.

23. The manufacturing method according to Claim 22,
wherein the at least one partition is formed of metal and is grounded.

24. The manufacturing method according to any one of Claims 13 to 23,
wherein the continuous carbon fiber bundle is fed to the chopper through a guide tube, and
the loosening treatment is performed on the continuous carbon fiber bundle before the continuous carbon fiber bundle is passed through the guide tube.

25. A manufacturing method of a carbon fiber sheet molding compound, comprising:
dropping chopped carbon fiber bundles generated by cutting a continuous carbon fiber bundle with a chopper, onto a moving carrier film to form a random mat;
impregnating the random mat with a paste comprising a thermosetting resin composition;
subjecting the continuous carbon fiber bundle to a loosening treatment before cutting with the chopper; and
dispersing the chopped carbon fiber bundles by a dispersing roll which is rotationally driven before being dropped onto the carrier film.

26. The manufacturing method according to Claim 25, further comprising:
providing a booth to dispose a main portion of the dispersing roll in the booth; and
using a shooter to guide the chopped carbon fiber bundles to an opening provided in a ceiling of the booth.

27. The manufacturing method according to Claim 25 or 26, further comprising:
removing fiber dust generated in accordance with the dispersion of the chopped carbon fiber bundles by the dispersing roll, using a dust collector.

28. The manufacturing method according to Claim 26, further comprising:
removing fiber dust generated in accordance with the dispersion of the chopped carbon fiber bundles by the dispersing roll, using a dust collector,
wherein a suction port connected to the dust collector is provided on any one or both of a wall surface of the booth and an inside of the booth.

29. The manufacturing method according to any one of Claims 25 to 28,
wherein the loosening treatment comprises piercing the continuous carbon fiber bundle with a protrusion.

30. The manufacturing method according to Claim 29,
wherein a roll with protrusions is used for the loosening treatment.

31. The manufacturing method according to any one of Claims 25 to 30,
wherein the loosening treatment comprises bending the continuous carbon fiber bundle.

32. The manufacturing method according to Claim 31,
wherein a gear pair consisting of two gears meshing with each other, each of the gears may be a spur gear, is used for the loosening treatment.

33. The manufacturing method according to any one of Claims 25 to 32, further comprising:
partitioning a space where the chopped carbon fiber bundles are dropped onto the carrier film by at least one partition into a plurality of regions along a T direction.

34. The manufacturing method according to Claim 33,
wherein the at least one partition is formed of metal and is grounded.

35. A manufacturing method of a carbon fiber sheet molding compound, comprising:
dropping chopped carbon fiber bundles generated by cutting a continuous carbon fiber bundle with a chopper, onto a moving carrier film to form a random mat;
impregnating the random mat with a paste comprising a thermosetting resin composition; and
partitioning a space where the chopped carbon fiber bundles are dropped onto the carrier film by at least one partition into a plurality of regions along a T direction,
wherein the at least one partition is formed of metal and is grounded.

36. The manufacturing method according to Claim 35,
wherein the chopped carbon fiber bundles are dispersed by a dispersing roll which is rotationally driven, and then dropped onto the carrier film.

37. The manufacturing method according to Claim 36, further comprising:
providing a booth to dispose a main portion of the dispersing roll and the at least one partition in the booth; and
using a shooter to guide the chopped carbon fiber bundles to an opening provided in a ceiling of the booth.

38. The manufacturing method according to Claim 36 or 37, further comprising:
removing fiber dust generated in accordance with the dispersion of the chopped carbon fiber bundles by the dispersing roll, using a dust collector.

39. The manufacturing method according to Claim 37, further comprising:
removing fiber dust generated in accordance with the dispersion of the chopped carbon fiber bundles by the dispersing roll, using a dust collector,
wherein a suction port connected to the dust collector is provided on any one or both of a wall surface of the booth and an inside of the booth.

40. The manufacturing method according to any one of Claims 35 to 39, further comprising:
subjecting the continuous carbon fiber bundle to a loosening treatment before cutting with the chopper.

41. The manufacturing method according to Claim 40,
wherein the loosening treatment comprises piercing the continuous carbon fiber bundle with a protrusion.

42. The manufacturing method according to Claim 41,
wherein a roll with protrusions is used for the loosening treatment.

43. The manufacturing method according to any one of Claims 40 to 42,
wherein the loosening treatment comprises bending the continuous carbon fiber bundle.

44. The manufacturing method according to Claim 43,
wherein a gear pair consisting of two gears meshing with each other, each of the gears may be a spur gear, is used for the loosening treatment.

45. A manufacturing apparatus of a carbon fiber sheet molding compound, comprising:
a chopper which is disposed above a moving path of a carrier film;
a guide tube through which a continuous carbon fiber bundle drawn from a package is fed to the chopper; and
a bundle loosener which is disposed on an upstream side of the guide tube and is used for loosening the continuous carbon fiber bundle.

46. The manufacturing apparatus according to Claim 45,
wherein the bundle loosener comprises a means for piercing the continuous carbon fiber bundle with a protrusion.

47. The manufacturing apparatus according to Claim 46,
wherein the bundle loosener comprises a roll with protrusions.

48. The manufacturing apparatus according to any one of Claims 45 to 47,
wherein the bundle loosener comprises a means for bending the continuous carbon fiber bundle.

49. The manufacturing apparatus according to Claim 48,
wherein the bundle loosener comprises a gear pair consisting of two gears meshing with each other, each of the gears may be a spur gear.

50. The manufacturing apparatus according to any one of Claims 45 to 49, further comprising:
a dispersing roll which is rotationally driven to disperse chopped carbon fiber bundles generated by cutting the continuous carbon fiber bundle with the chopper.

51. The manufacturing apparatus according to Claim 50,
wherein a main portion of the dispersing roll is disposed in a booth, and a shooter for guiding the chopped carbon fiber bundles is provided at an opening provided in a ceiling of the booth.

52. The manufacturing apparatus according to Claim 51,
wherein a suction port connected to a dust collector is provided on any one or both of a wall surface of the booth and an inside of the booth.

53. The manufacturing apparatus according to any one of Claims 45 to 52,
wherein, by at least one partition, a space where chopped carbon fiber bundles generated by cutting the continuous carbon fiber bundle with the chopper is dropped onto the moving path is partitioned into a plurality of regions along a T direction.

54. The manufacturing apparatus according to Claim 53,
wherein the at least one partition is formed of metal and is grounded.

55. The manufacturing apparatus according to any one of Claims 45 to 54,
wherein a length of the guide tube is 3 m or more and may be 5 m or more or 7 m or more.

56. A manufacturing apparatus of a carbon fiber sheet molding compound, comprising:
a chopper which is disposed above a moving path of a carrier film; and
a bundle loosener which is used for loosening a continuous carbon fiber bundle drawn out from a package and fed to the chopper,
wherein a distance from the bundle loosener to the chopper along a moving route of the continuous carbon fiber bundle is more than 3 m, more than 5 m, or more than 7 m.

57. The manufacturing apparatus according to Claim 56,
wherein the bundle loosener comprises a means for piercing the continuous carbon fiber bundle with a protrusion.

58. The manufacturing apparatus according to Claim 57,
wherein the bundle loosener comprises a roll with protrusions.

59. The manufacturing apparatus according to any one of Claims 56 to 58,
wherein the bundle loosener comprises a means for bending the continuous carbon fiber bundle.

60. The manufacturing apparatus according to Claim 59,
wherein the bundle loosener comprises a gear pair consisting of two gears meshing with each other, each of the gears may be a spur gear.

61. The manufacturing apparatus according to any one of Claims 56 to 60, further comprising:
a dispersing roll which is rotationally driven to disperse chopped carbon fiber bundles generated by cutting the continuous carbon fiber bundle with the chopper.

62. The manufacturing apparatus according to Claim 61,
wherein a main portion of the dispersing roll is disposed in a booth, and a shooter for guiding the chopped carbon fiber bundles is provided at an opening provided in a ceiling of the booth.

63. The manufacturing apparatus according to Claim 62,
wherein a suction port connected to a dust collector is provided on any one or both of a wall surface of the booth and an inside of the booth.

64. The manufacturing apparatus according to any one of Claims 56 to 63,
wherein, by at least one partition, a space where chopped carbon fiber bundles generated by cutting the continuous carbon fiber bundle with the chopper is dropped onto the moving path is partitioned into a plurality of regions along a T direction.

65. The manufacturing apparatus according to Claim 64,
wherein the at least one partition is formed of metal and is grounded.

66. The manufacturing apparatus according to any one of Claims 56 to 65, further comprising:
a guide tube through which a continuous carbon fiber bundle drawn from a package is fed to the chopper,
wherein the bundle loosener is disposed on an upstream side of the guide tube.

67. A manufacturing apparatus of a carbon fiber sheet molding compound, comprising:
a chopper which is disposed above a moving path of a carrier film;
a bundle loosener which is used for loosening a continuous carbon fiber bundle drawn out from a package and fed to the chopper; and
a dispersing roll which is rotationally driven to disperse chopped carbon fiber bundles generated by cutting the continuous carbon fiber bundle with the chopper.

68. The manufacturing apparatus according to Claim 67,
wherein the dispersing roll is disposed in a booth, and a shooter for guiding the chopped carbon fiber bundles is provided at an opening provided in a ceiling of the booth.

69. The manufacturing apparatus according to Claim 68,
wherein a suction port connected to a dust collector is provided on any one or both of a wall surface of the booth and an inside of the booth.

70. The manufacturing apparatus according to any one of Claims 67 to 69,
wherein the bundle loosener comprises a means for piercing the continuous carbon fiber bundle with a protrusion.

71. The manufacturing apparatus according to Claim 70,
wherein the bundle loosener comprises a roll with protrusions.

72. The manufacturing apparatus according to any one of Claims 67 to 71,
wherein the loosening treatment comprises a means for bending the continuous carbon fiber bundle.

73. The manufacturing apparatus according to Claim 72,
wherein the bundle loosener comprises a gear pair consisting of two gears meshing with each other, each of the gears may be a spur gear.

74. The manufacturing apparatus according to any one of Claims 67 to 73,
wherein, by at least one partition, a space where the chopped carbon fiber bundles are dropped onto the moving path is partitioned into a plurality of regions along a T direction.

75. The manufacturing apparatus according to Claim 74,
wherein the at least one partition is formed of metal and is grounded.

76. A manufacturing apparatus of a carbon fiber sheet molding compound, comprising:
a chopper which is disposed above a moving path of a carrier film; and
at least one partition which is formed of a metal and grounded,
wherein, by the at least one partition, a space where chopped carbon fiber bundles generated by cutting the continuous carbon fiber bundle with the chopper is dropped onto the moving path is partitioned into a plurality of regions along a T direction.

77. The manufacturing apparatus according to Claim 76, further comprising:
a dispersing roll which is rotationally driven to disperse the chopped carbon fiber bundles.

78. The manufacturing apparatus according to Claim 77,
wherein a main portion of the dispersing roll is disposed in a booth, and a shooter for guiding the chopped carbon fiber bundles is provided at an opening provided in a ceiling of the booth.

79. The manufacturing apparatus according to Claim 78,
wherein a suction port connected to a dust collector is provided on any one or both of a wall surface of the booth and an inside of the booth.

80. The manufacturing apparatus according to any one of Claims 76 to 79, further comprising:
a bundle loosener for loosening the continuous carbon fiber bundle before cutting with the chopper.

81. The manufacturing apparatus according to Claim 80,
wherein the bundle loosener comprises a means for piercing the continuous carbon fiber bundle with a protrusion.

82. The manufacturing apparatus according to Claim 81,
wherein the bundle loosener comprises a roll with protrusions.

83. The manufacturing apparatus according to any one of Claims 80 to 82,
wherein the bundle loosener comprises a means for bending the continuous carbon fiber bundle.

84. The manufacturing apparatus according to Claim 83,
wherein the bundle loosener comprises a gear pair consisting of two gears meshing with each other, each of the gears may be a spur gear.

85. The manufacturing apparatus according to any one of Claims 45 to 84,
wherein the carbon fiber sheet molding compound is obtained by impregnating a random mat comprising chopped carbon fiber bundles with a paste comprising a thermosetting resin composition.

86. The manufacturing method according to any one of Claims 1 to 44, further comprising:
applying part of the paste onto one surface of the carrier film before forming the random mat on the carrier film;
forming a laminate by superimposing another carrier film, on which another part of the paste is applied onto one surface, on the carrier film with the random mat interposed between the carrier films; and
compressing the laminate for the impregnation.

87. A manufacturing method of a carbon fiber sheet molding compound, comprising:
using the manufacturing apparatus according to any one of Claims 45 to 85.
